# EUROPÄISCHE PATENTANMELDUNG

(11) **EP 2 208 831 A1**
(43) Veröffentlichungstag der Anmeldung: **21.07.2010**
(21) Anmeldenummer: 09405012.7
(22) Anmeldetag: 20.01.2009
(51) Int. Cl.: E03D 5/10, G01S 17/88, G01S 17/50, G01S 17/02, G01S 7/48, G01S 7/497, G01V 8/14

(54) **Verfahren und elektronische Steuervorrichtung zur berührungslosen Steuerung einer sanitären Anlage**

(71) Anmelder: Geberit International AG, 8645 Jona (CH)
(72) Erfinder: Elsener, René, 8610 Uster (CH); Thaller, Roman, 8180 Bülach (CH); Zingg, Raffael, 8640 Rapperswil (CH); Steiner, Peter, 8645 Jona (CH)
(74) Vertreter: Groner, Manfred

(57) **Zusammenfassung**

Beim Verfahren zur berührungslosen Steuerung einer sanitären Anlage wird mit einem Sender, einem Empfänger, einer Auswerteinheit sowie einer Steuereinheit ein Raum (2) der sanitären Anlage (1) überwacht und wenigstens ein Aktor (5) der sanitären Anlage gesteuert. Die Überwachung des Raumes (2) erfolgt mittels einer Time-of-Flight Entfernungsmessung.

Insbesondere werden die räumliche Lage und/oder die Geschwindigkeit und/oder die Bewegungsrichtung von Objekten (7) im überwachten Raum (2) erfasst.

## Beschreibung

Die vorliegende Erfindung betrifft ein Verfahren zur berührungslosen Steuerung einer sanitären Anlage, mit einem Sender, einem Empfänger, einer Auswerteinheit sowie einer Steuereinheit, mit denen ein Raum der sanitären Anlage überwacht und wenigstens ein Aktor der sanitären Anlage gesteuert wird. Ein solches Verfahren und eine solche Steuervorrichtung sind Stand der Technik aus der EP-B-0670504 des Anmelders bekannt geworden. Die sanitäre Anlage ist hier insbesondere ein Urinal. Die Einrichtung besitzt für die Distanzmessung mittels Triangulation zwei Empfänger, die in unterschiedlichen Abständen zum Sender angeordnet sind. Mit dieser Steuereinrichtung kann ein Benutzer erfasst und eine Spülung ausgelöst werden. Reflexionen aus einem Hintergrund können ausgeblendet werden.

Bekannt sind auch berührungslose Steuereinrichtungen, die einen Infrarot-Lichttaster aufweisen, der in eine Wasserarmatur eingebaut ist. Beim Einführen einer Hand in die Erfassungszone dieses Lichttasters spricht dieser an und öffnet ein Auslaufventil. Bekannt ist auch die Verwendung von Radarsonden, die richtungserkennend sind und auf eine Hinbewegung als auch auf eine nachfolgende Bewegung ansprechen.

Zudem sind Steuervorrichtungen mit einer Kamera bekannt, die in Verbindung mit einer Bildanalyse beispielsweise bei einer Toilettenanlage einen Verschmutzungsgrad erkennen können.

Die genannten Verfahren bzw. Einrichtungen sind jeweils spezifisch auf eine bestimmte Sanitäranlage ausgelegt und vergleichsweise aufwendig.

Der Erfindung liegt die Aufgabe zugrunde, ein Verfahren bzw. eine elektronische Steuereinrichtung der genannten Art zu schaffen, welche auch für sehr unterschiedliche Sanitäranlagen geeignet sind.

Die Aufgabe ist bei einem gattungsgemässen Verfahren dadurch gelöst, dass der Raum mittels einer Time-of-Flight Entfernungsmessung überwacht wird. Eine Überwachung mit einer Time-of-Flight Entfernungsmessung ermöglicht eine dreidimensionale Vermessung des überwachten Raumes. In diesem Raum kann von einem Objekt, beispielsweise einem Benutzer, beispielsweise der Ort, die Bewegungsrichtung und auch die Geschwindigkeit ermittelt werden. Das Verfahren bzw. die erfmdungsgemässe Steuervorrichtung eignet sich deshalb im Wesentlichen für alle Arten von sanitären Anlagen, in denen ein Aktor, beispielsweise ein Auslaufventil, ein Spülventil einer Armatur oder dergleichen gesteuert werden muss. Der Aktor ist insbesondere eine Armatur. Die erfindungsgemässe Steuervorrichtung hat zudem den Vorteil, dass sie als sehr kleines, preisgünstiges und universelles Elektronikmodul realisierbar ist. Ein solches Modul kann beispielsweise in einer Taste oder dergleichen integriert werden.

Nach einer Weiterbildung des erfindungsgemässen Verfahrens wird aufgrund der Überwachung ein Nachtlicht eingeschaltet, sobald eine Person in den überwachten Raum tritt.

Nach einer Weiterbildung der Erfindung ist vorgesehen, dass die sanitäre Anlage mehrere Sanitärsysteme in einem gleichen Raum aufweist. Die Steuerausgänge dieser Sanitärsysteme sind logisch miteinander verknüpft. Mittels dieser Verknüpfung wird der Raum bezüglich einer Anwesenheit von Objekten überwacht und gegebenenfalls ein übergeordnetes System, beispielsweise ein Gebäudeleitsystem angesteuert. Beispielsweise kann damit eine Anlage gesteuert werden, die beispielsweise mehrere Urinale in einem Raum aufweist. Da mittels dreidimensionaler Vermessung des Raumes Personen als solche erkennbar sind, können Störungen weitgehend ausgeschlossen werden. Beispielsweise kann eine Auslösung durch ein Tier oder durch störende Infrarotquellen weitgehend vermieden werden. Dies ist bei grösseren Anlagen besonders wesentlich.

Nach einer Weiterbildung der Erfindung ist vorgesehen, dass vordefinierte Bewegungen und/oder Bewegungssequenzen von Objekten, beispielsweise einer Hand erfasst werden. Dadurch ist es beispielsweise möglich, die Annäherung einer Hand für eine Spülauslösung zu erfassen. Da auch die Bewegungsrichtung erfassbar ist, kann hierbei eine Spülung durch eine Handbewegung ausgeschlossen werden, welche nicht die vordefinierte Bewegung oder die vordefinierten Bewegungssequenzen aufweist. Auch hier wird die Störungsimmunität verbessert und dadurch kann Wasser eingespart werden.

Nach einer Weiterbildung der Erfindung wird im überwachten Raum die Haltung von Personen überwacht. Beispielsweise kann hierbei in einer WC-Toilette eine stehende von einer sitzenden Person unterschieden werden. Entsprechend kann automatisch eine kleine bzw. eine grössere Wassermenge zur Spülung ausgelöst werden. Auch in diesem Fall kann wesentlich Spülwasser gespart werden.

Nach einer Weiterbildung der Erfindung ist vorgesehen, dass nach der Montage der sanitären Anlage die Steuereinrichtung aufgrund der statischen Objekte, ihrer Lage im überwachten Raum und/oder ihrer Form selbsttätig erkennt, in was für eine Sanitäranlage sie eingesetzt ist und ein entsprechende Parametrierung einer universellen Hard- und Software vornimmt. Für unterschiedliche sanitäre Anlagen kann dann die gleiche Steuervorrichtung verwendet werden. Diese erkennt selber die Art der sanitären Anlage und führt selbsttätig entsprechende Parametrierung durch. Die Steuereinrichtung kann beispielsweise erkennen, ob sich in ihrer Nähe ein Urinalbecken, eine WC-Schüssel oder ein Waschbecken befindet. Die Steuervorrichtung passt somit seine Parameter an die Ansteuerung eines Spülventils für ein Urinal, eines Spülventils für eine WC-Toilette bzw. eines Auslaufventils an. Da für sehr unterschiedliche Sanitäranlagen im Wesentlichen die gleiche Steuervorrichtung verwendet werden kann, ergeben sich dadurch erhebliche Kostenvorteile und auch die Montage kann wesentlich vereinfacht werden.

Nach einer Weiterbildung der Erfindung ist vorgesehen, dass die Distanz aufgrund der Zeitdifferenz zwischen gesendetem und empfangenem Signalimpuls bestimmt wird. Nach einer Weiterbildung der Erfindung ist weiter vorgesehen, dass das modulierte Signal nicht kontinuierlich, sondern in der Form von Impulspaketen mit der Dauer einer festen Anzahl Modulationsperioden gesendet wird.

Nach einer Weiterbildung der Erfindung ist vorgesehen, dass fehlende Signale einer bekannten Kontur erkannt werden und dass aufgrund solcher fehlender Signale eine Aktion ausgelöst wird. Vorzugsweise ist zudem vorgesehen, dass Signale erfasst werden, wenn sie aus einem vorbestimmten Ort des überwachten Raumes stammen und vordefinierte Kriterien wie Kontur oder Verweildauer genügen.

Die erfindungsgemässe Steuervorrichtung ist gemäss einer Weiterbildung der Erfindung **dadurch gekennzeichnet, dass** der Sender, der Empfänger, die Auswerteinheit und die Steuereinheit auf einem elektronischen Modul angeordnet sind. Die genannten Einheiten mit Ausnahme des aktiven Sendeelementes sind insbesondere gemäss einer Weiterbildung der Erfindung auf einem Chip integriert. Die Steuervorrichtung kann dadurch auf sehr kleinem Raum realisiert und einfach eingebaut bzw. montiert werden.

Weitere vorteilhafte Merkmale ergeben sich aus den abhängigen Patentansprüchen und der nachfolgenden Beschreibung.

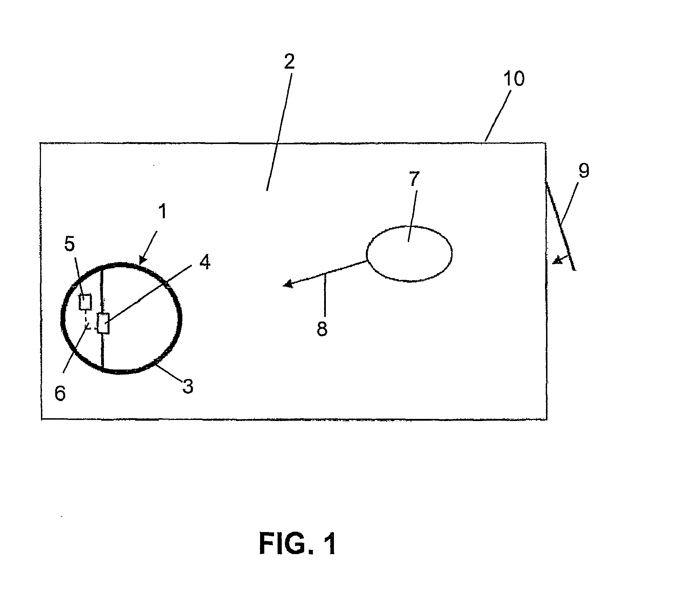

Ausführungsbeispiele der Erfindung werden nachfolgend anhand der einzigen Figur näher erläutert. Diese Figur zeigt schematisch einen Grundriss eines Raumes mit einer sanitären Anlage gemäss der Erfindung.

Die einzige Figur zeigt ein Gebäude 10 mit einem Raum 2, in dem eine Sanitäranlage 1 angeordnet ist. Diese besitzt einen Sanitärkörper 3, der beispielsweise ein Waschbecken ist. An diesem Sanitärkörper 3 ist eine Armatur 5 angeordnet, die insbesondere eine berührungslose Wascharmatur mit einem Auslassventil ist. Die Armatur 5 ist über eine Signalleitung 6 mit einer Steuervorrichtung 4 verbunden. Die Sanitäranlage 1 kann alternativ beispielsweise auch eine Urinalanlage mit einem Urinalbecken sein. Die Armatur 5 wäre in diesem Fall ein Spülventil. Weiter kann die Sanitäranlage 1 beispielsweise auch eine WC-Toilette sein. Auch in diesem Fall wäre die Armatur 5 ein Ventil, insbesondere eine Auslaufarmatur. Die Steuervorrichtung 4 kann in allen Fällen im Wesentlichen die gleiche sein. Ist die Armatur 5 als Wasserhahn ausgebildet, so kann die Steuervorrichtung 4 direkt in der Armatur 5 angeordnet sein. Im Fall einer WC-Toilette kann die Steuervorrichtung 4 beispielsweise in einer Taste angeordnet sein. Im Raum 2 können auch mehrere Sanitäranlagen 1, beispielsweise mehrere Urinalanlagen sowie ein Waschbecken angeordnet sein.

Die Steuervorrichtung 4 besitzt ein hier nicht gezeigtes Elektronikmodul, auf dem ein Sender, ein Empfänger, eine Auswerteinheit sowie eine Steuereinheit angeordnet sind. Die genannten Elemente, mit Ausnahme des aktiven Sendeelementes, können insbesondere in einem Chip integriert sein. Diese hier nicht gezeigten Elemente sind dem Fachmann an sich bekannt und brauchen deshalb hier nicht erläutert zu werden. Der Sender ist insbesondere ein Infrarotsender. Mit dem Sender wird ein Lichtsignal zur aktiven Beleuchtung ausgesendet. Trifft der Lichtimpuls beispielsweise auf ein sich im Raum 2 befindliches Objekt 7, so wird dieser dort reflektiert und schliesslich vom Empfänger detektiert. Die Steuervorrichtung 4 ist für die Tim-of-Flight Distanzmessung ausgebildet. Mit dem Aussenden des Impulses wird gleichzeitig eine hochauflösende Uhr im Empfänger gestartet. Die Entfernung zwischen der Steuervorrichtung 4 und dem Objekt 7 kann über die distanzabhängige Signallaufzeit des Impulses ermittelt werden. Mit dem Aussenden des Impulses wird gleichzeitig eine hochauflösende Uhr im Empfänger gestartet. Die Zeitmessung erfolgt beispielsweise über das Messen der Phasenverschiebung. Die Messung wird vorzugsweise zu ausgeführt, dass eine sogenannte 3D-Entfernungsmessung möglich ist. Hierzu kann beispielsweise das Objekt 7 mittels eines modulierten Richtstrahls abgetastet werden. Hierbei kann seriell Punkt für Punkt des Objektes 7 vermessen werden.

Gemäss einer Weiterbildung der Erfindung wird zur Zeitmessung das Messen einer Phasenverschiebung verwendet. Hierzu wird das gesendete Infrarotlicht in der Amplitude moduliert. Aus der Phasenverschiebung zwischen gesendetem und empfangenem Licht kann auf die Distanz zum reflektierten Objekt geschlossen werden. Das Verfahren zur Distanzmessung wird für jedes Sensorelement des Empfängers angewendet. Die Abbildung des Raumes auf eine zweidimensionale Anordnung von Sensorelementen liefert, zusammen mit der jedem Element zugeordneten Distanz, die dreidimensionale Information.

Für eine räumliche Entfernungsmessung sind hier aber auch andere Mittel und Verfahren denkbar, Damit kann, ausser der Position im Raum, der Geschwindigkeit und der Form des Objektes 7, auch die Bewegungsrichtung beispielsweise gemäss Pfeil 8 ermittelt werden. Die Steuervorrichtung 4 kann beispielsweise erkennen, dass sich das Objekt 7 mit einer bestimmten Geschwindigkeit der Sanitäranlage 1 nähert. Die Steuervorrichtung 4 kann so beispielsweise ein sich bewegendes Objekt von einem stillstehenden Objekt unterscheiden. In einem Fall ist beispielsweise das Objekt 7 eine Person, die sich der Sanitäranlage 1 nähert und im anderen Fall beispielsweise ein fest montierter Spiegel. Die Steuervorrichtung 4 kann aber auch beispielsweise ein hinzu tretendes von einem weg tretenden Objekt unterscheiden. Aufgrund einer Formerkennung kann weiter die Steuervorrichtung 4 beispielsweise eine Person von einem Tier unterscheiden. Mittels der Steuervorrichtung 4 ist es aber beispielsweise auch möglich, eine Tür 9 als solche zu erkennen und weiter festzustellen, ob sich diese öffnet oder schliesst.

Weiter kann die Steuervorrichtung erkennen, wenn ein Objekt bekannter Kontur, das kein Licht reflektiert, vor den Hindergrund tritt. Das fehlende Licht vom Hintergrund lässt auf ein Objekt schliessen, bei dem es sich beispielsweise um eine Person handeln kann, die vollständig schwarz gekleidet ist.

Ist die Sanitäranlage 1 ein Waschbecken, so kann die Steuervorrichtung 4 eine sich nähernde Hand erkennen und dann ein Ventil der Armatur 5 öffnen, wenn sich die Hand in einem bestimmten Abstand zur Armatur 5 befindet. Erkennt die Steuervorrichtung 4, dass sich die Hand vom Sanitärkörper 3 entfernt, so wird über die Signalleitung 6 das Auslaufventil geschlossen. Die Aktion der Steuervorrichtung 4 kann abhängig von der Anwendung unterschiedlich sein. Interpretiert die Steuervorrichtung 4 in einem Waschbecken das Objekt als Schmutz oder als bekannte Kontur, wie beispielsweise ein Gefäss, kann sie beispielsweise eine Wasserabgabe für eine definierte Zeit veranlassen.

Ist die Sanitäranlage 1 ein Urinal, so wird eine Spülung ausgelöst, wenn sich der Benutzer von der Sanitäranlage 1 entfernt. Aufgrund der Überwachung des Raumes 2 kann ausser der Spülung beispielsweise auch eine Raumbeleuchtung gesteuert werden. Beispielsweise kann ein Nachtlicht eingeschaltet werden, sobald eine Person in den überwachten Raum 2 tritt. Es ist aber auch möglich, eine Beleuchtung abzuschalten, sobald die Steuervorrichtung 4 feststellt, dass im Raum 2 keine Person gegenwärtig ist. Sind im Raum 2 beispielsweise mehrere Urinale angeordnet, so können die Steuerausgänge dieser Urinale logisch miteinander verknüpft sein. Mittels dieser Verknüpfung kann der gesamte Raum beispielsweise bezüglich einer Anwesenheit einer Person überwacht werden. Ein übergeordnetes System, beispielsweise ein Gebäudeleitsystem kann aufgrund einer solchen Überwachung angesteuert werden. Beispielsweise kann eine Lüftung ein- und ausgeschaltet werden.

Ist die Sanitäranlage 1 eine WC-Toilettenanlage, so wird diese beispielsweise mittels der Steuervorrichtung 4 berührungslos gespült. Die Steuervorrichtung 4 kann hierbei insbesondere unterscheiden, ob die Anlage stehend oder sitzend benutzt wird. Entsprechend wird von der Steuervorrichtung 4 eine kleine oder eine grosse Wassermenge zur Spülung ausgelöst. Die Auslösung kann berührungslos beispielsweise durch Annähern einer Hand an die Steuervorrichtung 4 ausgelöst werden. Hierbei ist wiederum wesentlich, dass die Steuervorrichtung 4 eine Bewegungsrichtung und beispielsweise auch erkennen kann, ob sich das sich nähernde Objekt 7 eine Hand oder ein anderer Gegenstand ist.

Die Steuervorrichtung 4 kann in einer Taste integriert sein. Dadurch ist durch Betätigen der Taste auch eine mechanische Auslösung durch Bewegen der Taste möglich. Die Steuervorrichtung 4 kann beispielsweise auch erkennen, ob die Türe 9 geöffnet wird. Wird das Öffnen der Tür 9 erkannt, so kann über die Steuervorrichtung 4 eine Raumbeleuchtung eingeschaltet werden. Beim Schliessen der Tür 9 wird dann entsprechend die Raumbeleuchtung ausgeschaltet. Die Überwachung des Raumes 2 ermöglicht somit verschiedene und unterschiedliche Aktionen. Diese Aktionen sind beispielsweise das Ein-und Ausschalten einer Beleuchtung, das Ein- und Ausschalten einer Lüftung und das Spülen der Sanitäranlage 1. Eine weitere Aktion wäre beispielsweise die Auslösung eines Alarms. Ein solcher Alarm wird beispielsweise ausgelöst, wenn innerhalb einer bestimmten Sperrfrist im Raum 2 eine Bewegung eines Objekts 7 ermittelt wird.

Die Steuervorrichtung 4 ist so ausgebildet, dass sie nach ihrer Montage erkennt, in was für eine Sanitäranlage 1 sie eingesetzt ist. Sie erkennt beispielsweise, dass der Sanitärkörper 3 ein Waschbecken, ein Urinal oder eine WC-Schüssel ist. Die Unterscheidung erfolgt aufgrund der unterschiedlichen Formgebungen dieser Sanitärkörper 3. Hat die Steuervorrichtung 4 die Sanitäranlage erkannt, so erfolgt selbsttätig eine entsprechende Parametrierung der universellen Hard- und Software. Bei einem Urinal sind dies beispielsweise die Spülzeit, die Spüldauer, die Spülmenge und elektrische Werte wie Spannung und Dauer der Aktoransteuerung. Die Steuervorrichtung 4 kann somit mit einer universellen Hard- und Software in jede beliebige Sanitäranlage 1 eingesetzt werden. Die entsprechende Parametrierung erfolgt dann selbsttätig. Einerseits ist es möglich, für mehrere unterschiedliche Sanitäranlagen 1 die gleiche Steuervorrichtung 4, beispielsweise ein entsprechendes elektronisches Modul zu verwenden, anderseits entfällt die vergleichsweise aufwendige Parametrierung durch den Installateur. Es kann auch vermieden werden, dass in ein Sanitäranlage 1 eine falsche Steuervorrichtung 4 eingesetzt wird.

### BEZUGSZEICHENLISTE

- 1: Sanitäranlage
- 2: Raum
- 3: Sanitärkörper
- 4: Steuervorrichtung
- 5: Armatur
- 6: Signalleitung
- 7: Objekt
- 8: Pfeil
- 9: Tür
- 10: Gebäude

## Patentansprüche

1. Verfahren zur berührungslosen Steuerung einer sanitären Anlage, mit einem Sender, einem Empfänger, einer Auswerteinheit sowie einer Steuereinheit, mit denen ein Raum (2) der sanitären Anlage (1) überwacht und wenigstens ein Aktor (5) der sanitären Anlage gesteuert wird, **dadurch gekennzeichnet, dass** der Raum (2) mittels einer Time-of-Flight Entfernungsmessung überwacht wird.

2. Verfahren nach Anspruch 1, **dadurch gekennzeichnet, dass** die räumliche Lage und/oder die Geschwindigkeit und/oder die Bewegungsrichtung von Objekten (7) im überwachten Raum (2) erfasst wird.

3. Verfahren nach Anspruch 1 oder 2, **dadurch gekennzeichnet, dass** für die Entfernungsmessung ein gesendetes Infrarotsignal mit einem Signal in der Amplitude moduliert wird und die Phasenverschiebung des empfangenen Modulationssignals gegenüber dem gesendeten Signal gemessen wird.

4. Verfahren nach einem der Ansprüche 1 bis 3, **dadurch gekennzeichnet, dass** aufgrund der Überwachung ein Nachtlicht eingeschaltet wird, sobald eine Person (7) in den überwachten Raum (2) tritt.

5. Verfahren nach einem der Ansprüche 1 bis 4, **dadurch gekennzeichnet, dass** die sanitäre Anlage (1) mehrere Santitärsysteme in einem gleichen Raum (2) aufweist, dass Steuerausgänge dieser Sanitärsysteme logisch verknüpft sind, dass mittels dieser Verknüpfung der Raum (2) bezüglich einer Anwesenheit von Objekten (7) überwacht wird und gegebenenfalls ein übergeordnetes System, beispielsweise ein Gebäudeleitsystem angesteuert wird.

6. Verfahren nach einem der Ansprüche 1 bis 5, **dadurch gekennzeichnet, dass** vordefinierte Bewegungen und/oder Bewegungssequenzen von Objekten (7), beispielsweise einer Hand erfasst werden.

7. Verfahren nach einem der Ansprüche 1 bis 6, **dadurch gekennzeichnet, dass** Signale unterdrückt werden, wenn sie aus einem vorbestimmten Ort des überwachten Raumes (2) stammen, so dass aufgrund solcher Signale keine Funktion oder Aktion ausgelöst wird.

8. Verfahren nach einem der Ansprüche 1 bis 7, **dadurch gekennzeichnet, dass** im überwachten Raum (2) die Haltung von Personen, wie zum Beispiels sitzend oder stehend, erfasst wird und dass aufgrund einer erfassten Haltung entsprechende Aktionen ausgelöst, beispielsweise eine entsprechende Spülmenge ausgelöst wird.

9. Verfahren nach einem der Ansprüche 1 bis 8, **dadurch gekennzeichnet, dass** nach der Montage der sanitären Anlage (1) die Steuereinheit aufgrund der statischen Objekte (7), ihrer Lage im überwachten Raum (2) und/oder ihrer Form selbsttätig erkennt, in was für eine Sanitäranlage (1) sie eingesetzt ist und eine entsprechende Parametrierung einer universellen Hard- und Software vornimmt.

10. Elektronische Steuervorrichtung zur berührungslosen Steuerung einer sanitären Anlage (1), mit einem Sender, einem Empfänger, einer Auswerteinheit sowie einer Steuereinheit, mit denen ein Raum der sanitären Anlage überwachbar und wenigstens ein Aktor der sanitären Anlage (1) steuerbar ist, **dadurch gekennzeichnet, dass** sie Mittel zum Überwachen des Raumes (2) mit einer Time-of-Flight Entfernungsmessung aufweist.

11. Steuervorrichtung nach Anspruch 10, **dadurch gekennzeichnet, dass** der Sender, der Empfänger, die Auswerteinheit und die Steuereinheit auf einem elektronischen Modul angeordnet sind.

12. Steuervorrichtung nach Anspruch 10 oder 11, **dadurch gekennzeichnet, dass** die Empfangseinheit einen Infrarot-Bildsensor aufweist, der aus reflektierten Infrarotsignalen für jeden Bildpunkt die Distanz bestimmt und so ein dreidimensionales Bild des überwachten Raumes (2) erzeugt.

13. Steuervorrichtung nach einem der Ansprüche 10 bis 12, **dadurch gekennzeichnet, dass** der Sender, der Empfänger, die Auswerteinheit und die Steuereinheit als Einheit auf einem Chip integriert sind.

14. Steuervorrichtung nach Anspruch 13, **dadurch gekennzeichnet, dass** die genannte Einheit in eine sichtbare Oberfläche eines Teils der sanitären Anlage (1), beispielsweise in eine Oberfläche einer Taste, einer Drückerplatte oder einer Abdeckplatte eingebaut ist.
